# EUROPÄISCHE PATENTSCHRIFT

(11) **EP 2 006 968 B1**
(45) Veröffentlichungstag und Bekanntmachung des Hinweises auf die Patenterteilung: **13.05.2009**
(21) Anmeldenummer: 07450116.4
(22) Anmeldetag: 21.06.2007
(51) Int. Cl.: H02G 3/36

(54) **Bauelement zur Herstellung eines Kabelkanals**
Assembly part for creating a cable duct
Composant destiné à la fabrication d'un câblage

(30) Priorität: 21.05.2007 AT 7882007
(43) Veröffentlichungstag der Anmeldung: 24.12.2008
(73) Patentinhaber: Candussi, Helmut, 9300 St.Veit/Glan (AT)
(72) Erfinder: Candussi, Helmut, 9300 St.Veit/Glan (AT)
(74) Vertreter: Atzwanger, Richard

(56) Entgegenhaltungen:
- EP-A- 1 569 312
- AT-U2- 7 786
- CH-A- 484 390

## Beschreibung

Die gegenständliche Erfindung betrifft ein Bauelement aus Beton zur Herstellung eines Kabelkanals bestehend aus einem durch eine Bodenplatte und durch von dieser angenähert im rechten Winkel abragenden Seitenwänden gebildeten Kabeltrog, welchem eine Deckplatte zugeordnet ist und welcher in Draufsicht trapezförmig ausgebildet ist, wobei die quer zu dessen Längsachse liegenden Stirnflächen mit der Normalebene auf die Längsachse einen spitzen Winkel, insbesondere einen Winkel von 45°, von 22,5° oder von 15°, einschließen.

Es ist bekannt, einen derartige Kabeltrog in Draufsicht rechteckig auszubilden. Zur Herstellung eines Kabelkanals werden solche Kabeltröge mit ihren quer zu deren Längsachse liegenden Stirnflächen aneinandergefügt. Sofern der Kabelkanal einen abgewinkelten Verlauf aufweisen soll, um dadurch um ein Hindernis herumgeführt zu werden, besteht das Erfordernis, mindestens einen der beiden aneinander liegenden Kabeltröge so zu bearbeiten, dass dessen eine Stirnseite mit der Längsachse einen gegenüber dem rechten Winkel geänderten Winkel aufweist. Obgleich es mittels derartiger Kabeltröge möglich ist, geradlinige und abgewinkelt verlaufende Kabelkanäle herzustellen, entsprechen solche Kabeltröge deshalb nicht den an sie gestellten Anforderungen, da sie zusätzlich bearbeitet werden müssen, wobei diese Bearbeitung in der Regel an der Baustelle vorgenommen wird.

Aus der EP 1569312 A2 sind weiters aus Beton hergestellte Kabeltröge bekannt, welche mit zu deren Längsachsen schräg verlaufenden Stirnflächen ausgebildet sind, wodurch unter deren Verwendung entweder geradlinig verlaufende oder mit Abwinkelungen ausgebildete Kabelkanäle hergestellt werden können. Sofern an einen ersten Kabeltrog ein um 180° gewendeter Kabeltrog angefügt wird, wird ein geradliniger Kabelkanal hergestellt. Sofern demgegenüber an einen ersten Kabeltrog ein zweiter Kabeltrog in gleicher Lage angefügt wird, wird ein mit einer Abwinkelung ausgebildeter Kabelkanal hergestellt, wobei das Ausmaß der Abwinkelung von denjenigen Winkeln abhängig ist, welche die aneinander liegenden Stirnflächen der beiden Kabeltröge mit den Längsachsen der Kabeltröge einschließen.

Bei der Herstellung derartiger Kabelkanäle muss weiters gewährleistet werden, dass die einzelnen aneinandergefügten Kabeltröge in ihrer gegenseitigen Lage gehalten werden. Insoweit als herkömmliche in Draufsicht rechteckige Kabeltröge betroffen sind, wird dies dadurch erzielt, dass diese Kabeltröge an ihren beiden Stirnflächen mit einander gegengleichen Leisten und Nuten ausgebildet sind. Sofern jedoch die Kabeltröge mit abgeschrägten Stirnflächen ausgebildet sind und in unterschiedlichen Lagen aneinandergefügt werden sollen, besteht das Erfordernis, diese derart auszubilden, dass sie in beiden möglichen Lagen aneinandergefügt werden können.
Dies wird erfindungsgemäß dadurch erzielt, dass der Kabeltrog an seinen beiden Stirnflächen jeweils mit einem Vorsprung und mit einer dem Vorsprung gegengleichen Ausnehmung ausgebildet ist, wobei sich in Bezug auf eine zur Bodenplatte vertikale Längsmittelebene der Vorsprung auf der einen Seite und die Ausnehmung spiegelbildlich auf der anderen Seite der betreffenden Stirnfläche befinden. Weiters sind vorzugsweise die an den beiden Stirnflächen vorgesehenen Vorsprünge bzw. Ausnehmungen jeweils zueinander diametral angeordnet.

Vorzugsweise sind der Vorsprung durch eine Leiste und die Ausnehmung durch eine der Leiste gegengleiche Nut gebildet. Dabei können der Vorsprung und die diesem gegengleiche Ausnehmung zumindest angenähert parallel zur Bodenplatte und zumindest angenähert parallel zu den Seitenwänden verlaufende Teile aufweisen. Insbesondere sind der Vorsprung und die diesem gegengleiche Ausnehmung L-förmig ausgebildet.

Der Gegenstand der Erfindung ist nachstehend anhand eines in der Zeichnung dargestellten Ausführungsbeispieles näher erläutert. Es zeigen:
- FIG.1 und 1a: einen erfindungsgemäßen Kabeltrog, in axonometrischer Darstellung und in Draufsicht;
- FIG.2,2a und 2b: zwei erfindungsgemäße Kabeltröge, welche zur Herstellung eines geradlinig verlaufenden Kabelkanals aneinandergefügt sind, in Draufsicht und in axonometrischer Darstellung, sowie
- FIG.3,3a und 3b: zwei erfindungsgemäße Kabeltröge, welche zur Herstellung eines mit einer Abwinkelung ausgebildeten Kabelkanals aneinandergefügt sind, in Draufsicht und in axonometrischer Darstellung.

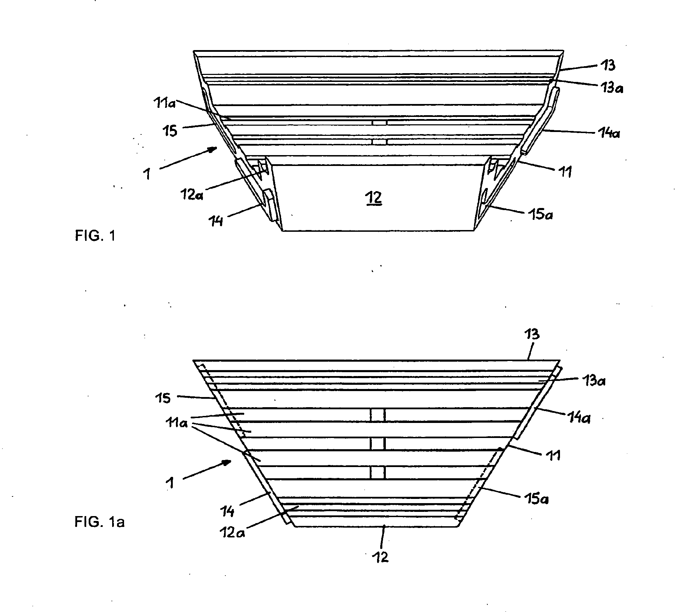

Der in FIG.1 und 1a dargestellte Kabeltrog 1 weist eine Bodenplatte 11 und zwei von dieser angenähert im rechten Winkel nach oben abragende Seitenwände 12 und 13 auf. Wie dies insbesondere aus FIG.1a ersichtlich ist, ist der Kabeltrog 1 in Draufsicht trapezförmig ausgebildet, wobei dessen beiden Stirnflächen mit der Normalebene auf die Längsachse einen spitzen Winkel α einschließen. Der Winkel α beträgt vorzugsweise 15°, 22,5° oder 45°. Ein derartiger Kabeltrog 1 wird aus in Formen gegossenen Beton hergestellt.

Die Bodenplatte 11 ist mit sich längserstreckenden Nuten 11a ausgebildet, in welche Platten eingesetzt werden können, durch welche der Kabelkanal in mehrere parallel verlaufende Teilkanäle unterteilbar ist. Weiters sind die oberen Stirnflächen der Seitenwände 12 und 13 mit Nuten 12a und 13a ausgebildet, welche zur Aufnahme von Dichtungsleisten dienen. Zudem ist dem Kabeltrog 1 eine nicht dargestellte Deckplatte zugeordnet.

Weiters sind an den beiden Stirnflächen des Kabeltroges 1 jeweils eine L-förmige Rippe 14 und 14a und jeweils eine diesen Rippen 14 und 14a gegengleiche Ausnehmung 15 und 15a vorgesehen, wobei sich die Rippen 14 und 14a in Bezug auf eine sich in Längsrichtung des Kabeltroges 1 erstreckende und auf die Bodenplatte 11 senkrecht stehende Symmetrieebene auf der einen Seite der Stirnflächen und die Ausnehmungen 15 und 15a auf der anderen Seite der Stirnflächen befinden. Die Rippen 14 und 14a und die Nuten 15 und 15a sind L-förmig ausgebildet, wobei sie einen ersten Teil aufweisen, welcher sich in Fortsetzung der Bodenplatte 11 erstreckt und weiters einen dazu quer verlaufenden zweiten Teil aufweisen, welcher sich in Fortsetzung der jeweils zugeordneten Seitenwand erstreckt. Weiters befinden sich die auf beiden Stirnflächen vorgesehenen Leisten 14, 14a einerseits und Nuten 15, 15a andererseits jeweils diametral zueinander.

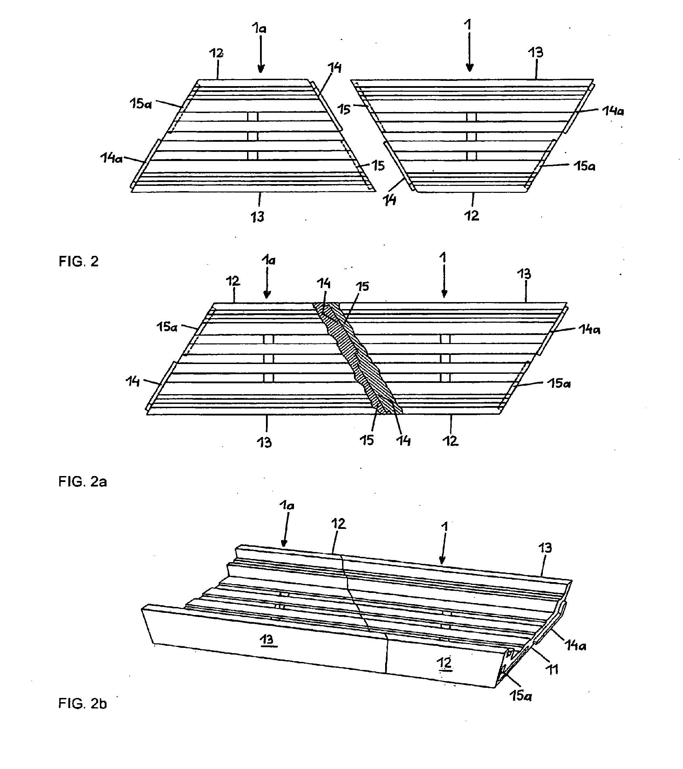

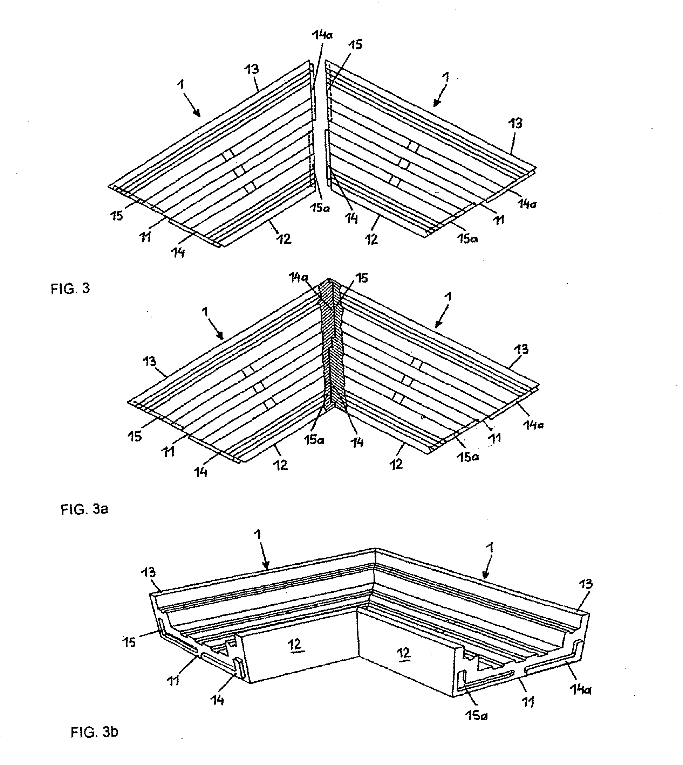

Diese Ausbildung der Stirnflächen dient dazu, aneinandergefügte Kabeltröge 1 miteinander so kuppeln zu können, dass sie sowohl in ihrer gegenseitigen Höhenlage als auch in ihrer gegenseitigen Querlage gehalten sind, wodurch sie gegeneinander nicht verschiebbar sind. Aufgrund der erläuterten Ausbildung der Rippen 14 und 14a bzw. der Ausnehmungen 15 und 15a können die einzelnen Kabeltröge 1 so aneinandergefügt werden, dass ein geradliniger Kabelkanal hergestellt wird oder dass ein mit einer Abwinkelung ausgebildeter Kabelkanal hergestellt wird.
Es wird hiezu auf die FIG. 2,2a und 2b sowie die FIG.3,3a und 3b verwiesen.

In FIG.2 sind zwei Kabeltröge 1 und 1a dargestellt, wobei der linke Kabeltrog 1a gegenüber dem rechten Kabeltrog 1 um 180° gewendet ist. Hierbei ist die Rippe 14 des Kabeltroges 1a der Nut 15 des Kabeltroges 1 zugeordnet und ist die Rippe 14 des Kabeltroges 1 der Nut 15 des Kabeltroges 1a zugeordnet. Durch ein Aneinanderfügen der beiden Kabeltröge 1 und 1a werden diese miteinander gekuppelt, sodass sie in ihrer gegenseitigen Lage fixiert sind.
Es wird hiezu auf die Darstellungen in den FIG. 2a und 2b verwiesen.

In den FIG.3, 3A und 3b sind zwei Kabeltröge 1 dargestellt, welche aneinandergefügt werden bzw. aneinandergefügt sind. Dabei werden die Rippen 14 und 14a in die Nuten 15a und 15 des jeweils anderen Kabeltroges 1 eingesetzt, wodurch ein mit einer Abwinkelung ausgebildeter Kabelkanal hergestellt wird, wobei die beiden Kabeltröge 1 durch die in die Nuten einragenden Rippen in ihren gegenseitigen Lagen gehalten sind.

Aufgrund dieser Ausbildung der Stirnflächen des Kabeltroges mit einander zugeordneten Rippen und diesen gegengleichen Nuten können die gleich ausgebildeten Kabeltröge entweder in um 180° gewendeter Lage oder in nicht gewendeter Lage aneinandergefügt und miteinander gekuppelt werden, wodurch entweder ein geradliniger Kabelkanal oder ein abgewinkelter Kabelkanal herstellbar ist.

## Patentansprüche

1. Bauelement aus Beton zur Herstellung eines Kabelkanals bestehend aus einem durch eine Bodenplatte [11] und von dieser angenähert im rechten Winkel abragenden Seitenwänden [12, 13] gebildeten Kabeltrog (1), welchem eine Deckplatte zugeordnet ist und welcher in Draufsicht trapezförmig ausgebildet ist, wobei die quer zu dessen Längsachse liegenden Stirnflächen mit der Normalebene auf die Längsachse einen spitzen Winkel, insbesondere einen Winkel von 45° von 22,5° oder von 15°, einschließen, **dadurch gekennzeichnet, dass** der Kabeltrog (1) an seinen beiden Stirnflächen jeweils mit einem Vorsprung (14, 14a) und mit einer dem Vorsprung gegengleichen Ausnehmung (15, 15a) ausgebildet ist, wobei sich in Bezug auf eine zur Bodenplatte (11) vertikale Längsmittelebene der Vorsprung auf der einen Seite und die Ausnehmung spiegelbildlich auf der anderen Seite der betreffenden Stirnfläche befinden.

2. Bauelement nach Patentanspruch 1, **dadurch gekennzeichnet, dass** die an den beiden Stirnflächen vorgesehenen Vorsprünge (14, 14a) bzw. Ausnehmungen (15, 15a) jeweils zueinander diametral angeordnet sind.

3. Bauelement nach einem der Patentansprüche 1 und 2, **dadurch gekennzeichnet, dass** der Vorsprung durch eine Leiste und die Ausnehmung durch eine der Leiste gegengleiche Nut gebildet sind.

4. Bauelement nach einem der Patentansprüche 1 bis 3, **dadurch gekennzeichnet, dass** der Vorsprung und die diesem gegengleiche Ausnehmung zumindest angenähert parallel zur Bodenplatte und zumindest angenähert parallel zu den Seitenwänden verlaufende Teile aufweisen.

5. Bauelement nach einem der Patentansprüche 1 bis 3, **dadurch gekennzeichnet, dass** der Vorsprung und die diesem gegengleiche Ausnehmung L-förmig ausgebildet sind.

## Claims

1. A component of concrete for producing a cable duct, consisting of a cable trough (1) formed of a base plate (11) and side walls (12, 13) projecting approximately at right angles therefrom, with which cable trough (1) a cover plate is associated and which is trapezoidal in form when viewed from above, the end faces disposed transversely of the longitudinal axis thereof forming an acute angle with the plane normal to the longitudinal axis, in particular an angle of 45°, of 22.5° or of 15°, **characterised in that** the cable trough (1) is provided at its two end faces in each case with a projection (14, 14a) and with a recess (15, 15a) mirror-inverted relative to the projection, the projection being located on the one side and the recess as a mirror image on the other side of the end face in question relative to a longitudinal central plane vertical relative to the base plate (11).

2. A component according to claim 1, **characterised in that** the projections (14, 14a) or recesses (15, 15a) provided on the two end faces are in each case arranged diametrically opposite one another.

3. A component according to either one of claims 1 and 2, **characterised in that** the projection is formed by a strip and the recess by a groove mirror-inverted relative to the strip.

4. A component according to any one of claims 1 to 3, **characterised in that** the projection and the recess mirror-inverted relative thereto comprise parts extending at least approximately parallel to the base plate and parts extending at least approximately parallel to the side walls.

5. A component according to any one of claims 1 to 3, **characterised in that** the projection and the recess mirror-inverted relative thereto are L-shaped.

## Revendications

1. Elément de construction en béton pour la fabrication d'un caniveau de câbles, composé d'un conduit de câbles (1) qui est formé par une plaque inférieure (11) et des parois latérales (12, 13) dépassant de celle-ci à peu près à angle droit, auquel est associée une plaque de recouvrement et qui, vu de dessus, à une forme trapézoïdale, les faces frontales transversales par rapport à l'axe longitudinal du conduit (1) formant avec le plan normal dudit axe longitudinal un angle aigu, en particulier un angle de 45°, de 22,5° ou de 15°,
**caractérisé en ce que** le conduit de câbles (1) est pourvu sur chacune de ses deux faces frontales d'une saillie (14, 14a) et d'un creux (15, 15a) correspondant à celle-ci, étant précisé que par rapport à un plan longitudinal médian vertical par rapport à la plaque inférieure (11), la saillie se trouve d'un côté et le creux, en miroir, de l'autre côté de la face frontale concernée.

2. Elément de construction selon la revendication 1, **caractérisé en ce que** les saillies (14, 14a) et les creux (15, 15a) prévus sur les deux faces frontales sont diamétralement opposés.

3. Elément de construction selon l'une des revendications 1 et 2, **caractérisé en ce que** la saillie est formée par un rebord, et le creux par une rainure correspondant au rebord.

4. Elément de construction selon l'une des revendications 1 à 3, **caractérisé en ce que** la saillie et le creux correspondant à celle-ci présentent des parties qui sont au moins approximativement parallèles à la plaque inférieure et des parties qui sont au moins approximativement parallèles aux parois latérales.

5. Elément de construction selon l'une des revendications 1 à 3, **caractérisé en ce que** la saillie et le creux correspondant à celle-ci ont une forme en L.
